Europäisches Patentamt

European Patent Office

Office européen des brevets

(11) Veröffentlichungsnummer: **0 208 129**
A2

# (12) EUROPÄISCHE PATENTANMELDUNG

(21) Anmeldenummer: 86107391.4

(22) Anmeldetag: 30.05.86

(51) Int. Cl.⁴: **H 02 B 1/12**

(30) Priorität: 29.06.85 DE 3523328

(43) Veröffentlichungstag der Anmeldung:
14.01.87 Patentblatt 87/3

(84) Benannte Vertragsstaaten:
CH DE FR GB IT LI

(71) Anmelder: BROWN, BOVERI & CIE Aktiengesellschaft
Kallstadter Strasse 1
D-6800 Mannheim 31(DE)

(72) Erfinder: Görner, Wilmut
Buchweg 6
D-6933 Mudau(DE)

(72) Erfinder: Simon, Manfred, Ing. grad.
Schwetzinger-Strasse 43-45
D-6900 Heidelberg 1(DE)

(74) Vertreter: Kempe, Wolfgang, Dr. et al,
c/o Brown, Boveri & Cie AG Postfach 351
D-6800 Mannheim 1(DE)

(54) Schutzgehäuse.

(57) Die Erfindung betrifft ein explosionsgeschütztes Gehäuse (10, 12), in das wenigstens ein elektrisches Installationsgerät (40) eingesetzt ist, wobei das Gehäuse (10, 12) zweigeteilt ist in ein Gehäusevorderteil (10) und ein Gehäuserückteil (12) an welchem Halteelemente (30) angeordnet sind, die zur Befestigung von Installationsgeräten (40) dienen. Eine Nut- und Feder-Dichtverbindung (38) an den Dichtflächen beider Gehäuseteile (10, 12) sorgt für deren druckfesten Abschluß.

Fig.2

EP 0 208 129 A2

0208129

B R O W N , B O V E R I & C I E    AKTIENGESELLSCHAFT

Mannheim                              7. Mai 1986

Mp.Nr. 578/85                         ZPT/P4-Mi/Hl

## Schutzgehäuse

Die Erfindung betrifft ein Schutzgehäuse in der Zündschutzart "erhöhte Sicherheit" gemäß dem Oberbegriff des
Anspruchs 1.

Diese Gehäuse werden häufig für explosionsgeschützte
Einbaukomponenten benötigt, die in örtlichen Bereichen
mit Explosionsgefahr eingesetzt werden. Die Explosionsgefahr resultiert daraus, daß vorhandene explosible Gemische infolge Funkenbildung oder zu hoher Temperatur der elektrischen Einbaukomponenten entzündet
werden können. Diese explosionsgeschützten Einbaugeräte
werden mittels zwei oder mehreren Befestigungschrauben
in dem Unterteil des Schutzgehäuses befestigt. Für die
Bemessung dieses Schutzgehäuses, insbesondere für die
Abstände der Wandinnenflächen des Schutzgehäuses von
Anschlußklemmen der Einbaugeräte, gelten die VDE-Vorschriften. Danach dürfen diese Abstände nicht zu gering
bemessen sein.

0208129

Aufgabe der vorliegenden Erfindung ist es, ein Schutzgehäuse der eingangs genannten Art so auszugestalten auszugestalten, daß explosionsgeschützte Einbaugeräte ohne großen Aufwand einsetzbar und anschließbar sind. Diese Aufgabe wird erfingungsgemäß gelöst durch die kennzeichnenden Merkmale des Anspruchs 1. Erfindungsgemäß ist zur Lösung der Aufgabe vorgesehen, ein Gehäuse der eingangs genannten Art zweiteilig auszuführen und die Schnittebene beider Gehäuseteile parallel zur Befestigungsebene anzuordnen. Zur druckfesten Abdichtung im montierten Zustand sind die Trennflächen der Gehäuseteile als Nut- und Federverbindung ausgestaltet. In dem Gehäuseteil, das zur Befestigung an der Installationsfläche vorgesehen ist, sind Halteelemente zur Befestigung der eingesetzten Einbaugeräte angeordnet.

Gemäß einer besonders vorteilhaften Ausgestaltung der Erfindung ist vorgesehen, die Schnittebene der beiden Gehäuseteile bereichsweise in einer Stufe versetzt auszuführen und damit den freien Zugang zu den Anschlußklemmen des eingesetzten Einbaugerätes bei abgenommenem Gehäusevorderteil zu gestatten. Dadurch ist die Möglichkeit gegeben, den Abstand der benachbarten Gehäusewand des Gehäuserückteiles zum Einbaugerät kleiner auszuführen, so daß die gesamte Gehäusebreite reduziert werden kann. Wenn bei Nichtvorsehen der Versetzung die obere Kante des Gehäuserückteils oberhalb der Klemme des Einbaugerätes liegt, muß zur Herstellung einer korrekten Verbindung des Anschlußleiters mit der Klemme gemäß den VDE-Vorschriften über "erhöhte Sicherheit" der Abstand der Wandinnenfläche zur Klemme ausreichend groß gemacht werden. Bei tatsächlich ausgeführten Gehäusen kann dieser Abstand 20 mm betragen. Durch die erfindungsgemäße Ausgestaltung ist der 20 mm-Abstand nicht mehr erforder-

0208129

lich, weil die Klemme von der Seite frei zugänglich ist. Man braucht jetzt nur noch den Mindestabstand einzuhalten, den Abstand z.B. nur noch zu 6 bis 8 mm zu bemessen, weswegen eine Verringerung der Gehäusebreite um 14 bis 12 mm (bzw. das Doppelte) erreichbar ist.

Erfindungsgemäß hat das zur Befestigung des Einbaugerätes vorgesehene Halteelement die Form einer Hutprofilschiene, deren mittlerer Bereich voll in das Gehäuserückteil integriert ist.

In weiterer vorteilhafter Ausgestaltung der Erfindung ist vorgesehen, die freien Kanten des Halteprofils mit Einkerbungen zu versehen, welche von entsprechenden Nasen an der Haltevorrichtung der Einbaugeräte formschlüssigen Eingriff erfahren und dazu dienen, die Positionierung der Einbaugeräte in Bezug auf den seitlichen Abstand zur Gehäuseseite bzw. untereinander festzulegen. Das Halteprofil kann gemäß der Erfindung eine metallische Hutprofilschiene standardisierter Bauart sein, die in die Rückwand des Gehäuserückteils eingeformt oder eingespritzt ist. Bei Verwendung von ausreichend schlagfestem spritzfähigem Kunststoff kann das Halteprofil auch direkt an die Gehäuserückwand angeformt sein.

Gemäß der Erfindung ist die Nut- und Feder-Abdichtung der beiden Gehäuseteile konstruktiv so vorgesehen, daß die Nut entlang der Trennlinie an den Stirnseiten der Seitenwände des Gehäusevorderteils ausgeformt ist, während am Gehäuserückteil die entsprechende Feder angeformt ist. In die Nut ist eine Dichtung eingelegt, die beim Zusammenfügen der beiden Gehäuseteile eventuelle toleranz- oder fertigungsbedingte Unebenheiten an der Dichtfläche ausgleicht und dadurch bedingte Undichtigkeiten verhindert. Der stufenförmige Versatz der Schnittebene der beiden Gehäuseteile ist derart vorgesehen,

daß die Seitenwände des Gehäuserückteils jeweils auf den Längsseiten zur Rückwand hin eine streifenförmige Ausnehmung aufweisen und daß an die Längsseitenwände des Gehäusevorderteils jeweils paßgenau ein entsprechender Streifen angeformt ist.

Diese und weitere vorteilhafte Ausgestaltungen sind den Unteransprüchen zu entnehmen.

Anhand der Zeichnung, in der ein Ausführungsbeispiel der Erfindung dargestellt ist, sollen die Erfindung, vorteilhafte Ausgestaltungen und Verbesserungen der Erfindung sowie weitere Vorteile näher erläutert und beschrieben werden.

Es zeigen:

Fig. 1     Draufsicht auf ein Gehäusevorderteil,

Fig. 2     Draufsicht auf ein Gehäuserückteil mit eingesetztem Einbaugerät,

Fig. 3     Querschnitt durch ein Gehäuserückteil.

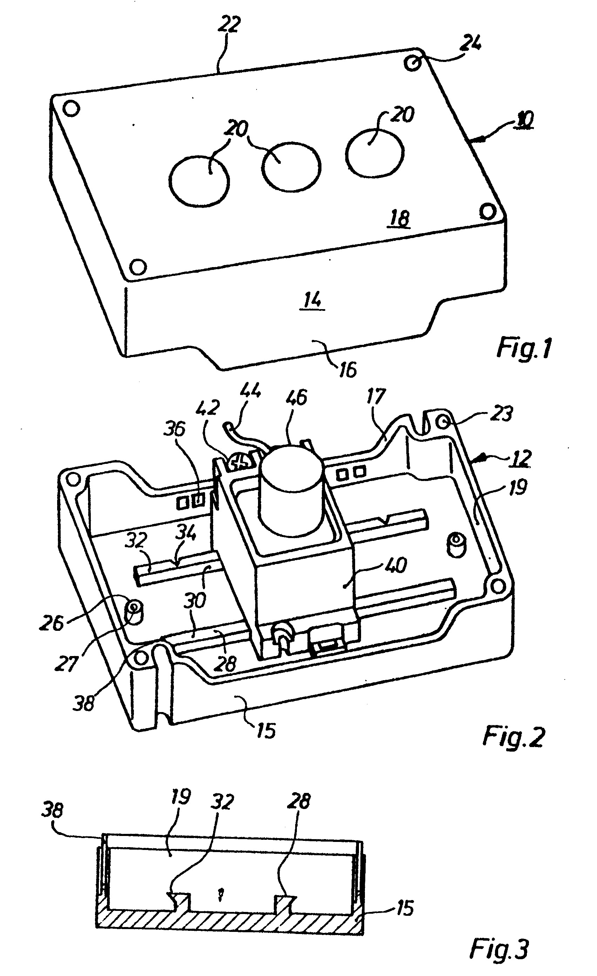

Fig. 1 zeigt die perspektivische Darstellung eines quaderförmigen Gehäusevorderteils 10 in der Draufsicht. Deutlich zu erkennen ist auf der sichtbaren Längsseite 14 die Anformung 16, die etwa Badewannenprofil hat. Auf der halben Breite der ebenen Deckfläche 18 sind Öffnungen 20 vorgesehen, in welche nicht dargestellte Betätigungskappen eingesetzt werden, die die Kapselung des Gehäuses gewährleisten und gleichzeitig die Betätigung von eingesetzten Einbaugeräten, die ebenfalls in Fig. 1 nicht dargestellt sind, zu ermöglichen. An den vier Ecken der Deckfläche 18 sind ferner Bohrungen 24 vorgesehen, die zur Aufnahme von nicht gezeigten Halteschrauben dienen, mit denen das Gehäusevorderteil 10 an dem in Fig. 2 gezeigten Gehäuserückteil 12 befestigbar ist.

0208129

In Fig. 2 ist ein Gehäuserückteil 12 dargestellt, dessen Längsseitenwände 15 jeweils eine Ausnehmung 17 aufweisen, die paßgenau der Anformung 16 des Gehäusevorderteils 10 angepaßt ist. In das Gehäuserückteil 12 ist ein Einbaugerät 40 eingesetzt, das auf ein Halteelement 30, das im Gehäuserückteil 12 vorgesehen ist, aufgeschnappt ist. In Weiterführung der Bohrungen 24 im Gehäusevorderteil 10 sind auch an den Ecken des quaderförmigen Gehäuserückteils 12 Bohrungen 23 vorgesehen, die zur Aufnahme der Halteschrauben vorbereitet sind, mit denen das Gehäusevorderteil 10 am Gehäuserückteil 12 befestigt ist. Etwa auf halber Breite der Schmalseiten können innerhalb des Gehäuserückteils 12 nahe den Seitenwänden 19 je ein Zapfen 26 mit einer Bohrung 27 vorgesehen sein, die für die Aufnahme von Schrauben zur Befestigung von Montageplatten dienen.

Zwischen diesem Zapfen 26 sind hutprofilförmige Halteelemente 30 angeordnet, die bereits erwähnt wurden und zum Aufschnappen der Installationsgeräte 40 dienen. Während das eine Schienenelement 28 mit konstantem Querschnitt verläuft, sind im gegenüberliegenden Schienenelement 32 drei Einkerbungen 34, entsprechend der maximalen Anzahl der zum Einsatz vorgesehenen Installationsgeräte 40, eingeformt.

Innen an der Längsseitenwand 15, die dem gekerbten Schienenelement 32 zugewandt ist, sind Halteklammern 36 angeformt, die den Einkerbungen 34 gegenüberliegen und zur Aufnahme von nicht gezeigten Kontaktstücken dienen, die zum elektrischen Anschluß der N- oder PE-Leiter dienen.

Die Einkerbungen 34 sind so angeordnet und bemessen, daß an der Montagefläche der Installationsgeräte 40 befindliche, in dieser Darstellung nicht sichtbare Rastnasen

0208129

beim Aufschnappen in die Kerben 34 eingreifen und sicherstellen, daß das jeweilige Installationsgerät 40 seine ihm zugeordnete Position einnimmt.

Das skizzenhaft gezeigte Einbaugerät 40 weist an den Schmalseiten Öffnungen 42 auf, in die zum elektrischen Anschluß der jeweilige Leiter 44 eingeführt wird und mittels einer Klemmschraube 46 fixiert wird.

Dadurch daß die Schnittebene im Bereich der für den Einbau vorgesehenen Platzes stufenförmig zur Installationsfläche hin soweit abgesetzt ist, sind die vorgenannten Anschlußöffnungen 42 und die Anschlußklemmen 46 an den Einbaugeräten 40 von der Seite her frei und damit mühelos erreichbar.

Zur Abdichtung des kompletten Gehäuses beim Zusammenbau ist die Stirnfläche der Seitenwände 15, 19 mit einer umlaufenden Dichtfeder 38 versehen, die in eine entsprechend formangepaßte Dichtnut auf der Gegenseite, das heißt auf der Dichtfläche des Gehäusevorderteils 10 eingreift.

In Fig. 3 ist ein Querschnitt durch das Gehäuserückteil 12 dargestellt, aus dem die Anordnung der Dichtfedern 38 auf den Stirnflächen der Seitenwände 15 erkennbar ist. Etwa mittig zwischen beiden Seitenwänden 15 sind die Schienenelemente 28, 32 des Halteelements 30 im Profil zu erkennen. Zwischen beiden Schienenelementen 28, 32 ist ein Zapfen 26 gezeigt, der wie bereits erläutert eine Bohrung 27 aufweist, die zur Befestigung von Montageplatten dient.

Im gezeigten Beispiel ist das Halteelement 30 einstückig mit dem Gehäuserückteil verbunden, das heißt, es besteht aus dem gleichen Material wie das Gehäuserückteil 12 selbst. In anderen Ausführungen, insbesondere bei Schutzgehäusen für eine größere Anzahl von explosionsgeschützten Einbaugeräten, kann stattdessen auch ein metallisches Halteelement, z. B. eine standardisierte Hutprofilschiene vorgesehen sein, die in entsprechende Ausnehmungen des Gehäuserückteils 12 eingepaßt ist, oder im Zuge der Gehäuseherstellung mit Kunststoff umspritzt mit dem Gehäuserückteil 12 verbunden wird.

0208129

A n s p r ü c h e

1. Schutzgehäuse, in das wenigstens ein elektrisches Einbaugerät eingesetzt ist, dadurch gekennzeichnet, daß das Gehäuse (10, 12) zweigeteilt ist in ein Gehäusevorderteil (10) und ein Gehäuserückteil (12), daß am Gehäuserückteil (12) Halteelemente (30) angeordnet sind, die zur Befestigung von Einbaugeräten (40) dienen, und daß zum dichten Abschluß beide Gehäuseteile (10, 12) eine Nut- und Feder-Dichtverbindung (38) aufweisen.

2. Schutzgehäuse nach Anspruch, dadurch gekennzeichnet, daß die Teilungsebene der beiden Gehäuseteile (10, 12) jeweils an deren Längsseiten (14,15) bereichsweise einen Versatz aufweist, wobei am Gehäuserückteil (12) eine streifenförmige Ausnehmung (17) vorgesehen ist und am Gehäusevorderteil (10) eine streifenförmige Anformung (16), die paßgenau in die Ausnehmung (17) eingreift.

3. Schutzgehäuse nach Anspruch 2, mit einem Einbaugerät mit Anschlußklemmen, dadurch gekennzeichnet, daß die obere Kante des Gehäuserückteils (12) im Bereich der Ausnehmung (17) unterhalb der Anschlußklemmen (46) liegt, so daß anzuschließende Leiter (44) frei und ohne Behinderung von der Seite den Anschlußklemmen (46) zuführbar sind.

4. Schutzgehäuse nach einem der Ansprüche 1 bis 3, dadurch gekennzeichnet, daß in der Deckfläche (18) des Gehäusevorderteils Öffnungen (20) zum Betätigen von

0208129

eingesetzten Einbaugeräten (40) vorgesehen sind.

5. Schutzgehäuse nach einem der Ansprüche 1 bis 4, dadurch gekennzeichnet, daß die Halteelemente (30) im Gehäuserückteil (12) hutprofilförmig ausgestaltet sind und aus zwei Schienenelementen (28, 32) gebildet sind.

6. Schutzgehäuse nach einem der Ansprüche 1 bis 5, dadurch gekennzeichnet, daß die Halteelemente (30) aus dem gleichen Material wie das Gehäuserückteil (12) bestehen und einstückig mit diesem verbunden sind.

7. Schutzgehäuse nach einem der Ansprüche 1 bis 4, dadurch gekennzeichnet, daß die Halteelemente (30) genormte metallische Hutprofilschienen sind, die in das Gehäuserückteil (12) eingesetzt sind.

0208129

Fig.1

Fig.2

Fig.3